# EUROPEAN PATENT APPLICATION

(11) **EP 4 764 158 A1**
(43) Date of publication of application: **24.06.2026**
(21) Application number: 25226003.9
(22) Date of filing: 19.12.2025
(51) Int. Cl.: F01D 5/14, F01D 9/04, F01D 25/30

(54) **GAS TURBINE ENGINE SLOTTED STRUT**

(30) Priority: 23.12.2024 US 202419000071
(71) Applicant: Pratt & Whitney Canada Corp., (01BE5) Longueuil, QC J4G 1A1 (CA)
(72) Inventor: SCHEMBRI, Jeremy, (01BE5) Longueuil, J4G 1A1 (CA); GOVER, Christopher, (01BE5) Longueuil, J4G 1A1 (CA)
(74) Representative: Dehns

(57) **Abstract**

An apparatus for a gas turbine engine (20), such as an apparatus for a turbine exhaust section (49). The apparatus includes an airfoil (70) extending spanwise along a span line (72) from a base (74) to a tip (76). The airfoil (70) extends laterally between a pressure side (78) and a suction side (80), and the airfoil (70) extends along a chord line (82) from a leading edge (84) to a trailing edge (86). The airfoil (70) includes a slot (88) extending through the airfoil (70) from a slot inlet (94) to a slot outlet (96). The slot inlet (94) is disposed on the pressure side (78) and the slot outlet (96) is disposed on the suction side (80) The slot (88) defines a channel (98) for directing fluid flow from the pressure side (78) to the suction side (80) through the airfoil (70), such that the slot (88) will bypass the associated pressure losses from a blunt facing body.

## Description

### TECHNICAL FIELD

This disclosure relates to gas turbine engine components, generally, and to a strut assembly used within gas turbine engines, in particular.

### BACKGROUND INFORMATION

Aerodynamic profiles of airfoils within gas turbine engines are optimized to maximize efficiency and performance when the angle of attack of incoming flow is within an accepted range. However, certain operating conditions can produce incoming flows with highly variable angles of attack which can lead to significant performance losses. There is a need, therefore, to provide an airfoil which can reduce, minimize, or eliminate losses during operating conditions which produce incoming flows with highly variable angles of attack.

### SUMMARY

According to an aspect of the present invention, an apparatus for a gas turbine engine is provided comprising an airfoil. The airfoil extends spanwise along a span line from a base to a tip. The airfoil extends laterally between a pressure side and a suction side. The airfoil extends along a chord line from a leading edge to a trailing edge. The airfoil includes a slot extending through the airfoil from a slot inlet to a slot outlet. The slot inlet is disposed on the airfoil pressure side and the slot outlet is disposed on the airfoil suction side. The slot defines a channel for directing fluid flow from the pressure side to the suction side through the airfoil, such that the slot is configured to reduce pressure losses within the apparatus.

According to another aspect of the present invention, another apparatus for a gas turbine engine is provided comprising an airfoil. The airfoil extends spanwise along a span line from an airfoil base to an airfoil tip. The airfoil extends laterally between a pressure side and a suction side. The airfoil extends along a chord line from a leading edge to a trailing edge. The airfoil includes a slot extending through the airfoil from a slot inlet to a slot outlet. The slot inlet is disposed on the pressure side and the slot outlet is disposed on the suction side. The slot defines a channel for directing fluid flow from the pressure side to the suction side through the airfoil, such that slot is configured to reduce pressure losses within the apparatus. A center of the slot inlet is disposed along the chord line at a first distance (from the leading edge), and a center of the slot outlet is disposed along the chord line at a second distance (from the leading edge). The second distance is greater than the first distance.

In an embodiment of the above, the slot extends spanwise along the airfoil from a slot base to a slot tip.

In an embodiment according to any of the previous embodiments, the airfoil is one of a plurality of airfoils arranged in an array. Each of the plurality of airfoils includes a respective slot configured to reduce pressure losses within the apparatus.

In an embodiment according to any of the previous embodiments, the slot inlet includes an inlet width, and the slot outlet includes an outlet width. The outlet width may be equal to the inlet width. The outlet width may alternatively be equal to or less than the inlet width. The outlet width may alternatively be equal to or greater than the inlet width.

In an embodiment according to any of the previous embodiments, the slot inlet comprises a first slot inlet including a center and the slot outlet comprises a first slot outlet including a center. The airfoil includes a second slot extending through the airfoil from a second slot inlet to a second slot outlet. The second slot defines a second channel for directing fluid flow from the pressure side to the suction side through the airfoil. A center of the second slot inlet is disposed on the pressure side and spaced chordwise from the center of the first slot inlet. A center of the second slot outlet is disposed on the suction side and spaced chordwise from the center of the first slot outlet.

In an embodiment according to any of the previous embodiments, the slot comprises a plurality of perforations extending spanwise along the airfoil between the base of the airfoil and the tip of the airfoil. A first of the plurality of perforations extends spanwise along the airfoil from a first perforation base to a first perforation tip. A second of the plurality of perforations extends spanwise along the airfoil from a second perforation base to a second perforation tip. The second of the plurality of perforations is disposed radially outward of the first of the plurality of perforations. A boundary extends spanwise along the airfoil from the first perforation tip to the second perforation base.

In an embodiment according to any of the previous embodiments, a center of the slot inlet is disposed on the suction side of the airfoil at a first distance (from the leading edge), the first distance comprising a length of the chord line ranging from about ten percent to about ninety percent.

In an embodiment according to any of the previous embodiments, a strut comprises the airfoil.

In an embodiment according to any of the previous embodiments, the apparatus further comprises an inner hub and an outer platform. The outer platform is radially outboard of the inner hub. The airfoil extends radially between and connects to the inner hub and the outer hub. The slot may extend spanwise along the airfoil from the inner hub to the outer platform.

In an embodiment according to any of the previous embodiments, the apparatus further comprises a turbine exhaust section of the gas turbine engine. The airfoil may be arranged within the turbine exhaust section.

In an embodiment according to any of the previous embodiments, the airfoil leading edge has an eased profile.

According to still another aspect of the present invention, a strut assembly for a turbine exhaust section of a gas turbine engine is provided. The strut assembly includes an inner hub, an outer platform, a plurality of stepped airfoils, and a flow channel. The outer platform is radially outboard of the inner hub. The plurality of stepped airfoils extend radially between and connect to the inner hub and the outer platform. A first stepped airfoil of the plurality of stepped airfoils extends spanwise along a span line from a first base to a first tip. The first stepped airfoil extends laterally between a first pressure side and a first suction side. The first stepped airfoil extends along a chord line from a first leading edge to a first trailing edge. A second stepped airfoil of the plurality of stepped airfoils extends spanwise along the span line from a second base to a second tip. The second stepped airfoil extends laterally between a second pressure side and a second suction side. The second stepped airfoil extends along the chord line from a second leading edge to a second trailing edge. The flow channel extends between the second suction side of the second stepped airfoil and the first pressure side of the first stepped airfoil. The flow channel is configured to reduce pressure losses within the strut assembly.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic cross-sectional view of a gas turbine engine.
FIG. 2 is a schematic illustration of a strut assembly for a gas turbine engine.
FIG. 3 is a schematic partial side sectional view of an embodiment of the strut assembly of FIG. 2, along lines 2-2.
FIG. 3A is a schematic cross-sectional view of an airfoil for the strut assembly of FIG. 3, along lines A-A.
FIG. 3B is a schematic cross-sectional view of an airfoil for the strut assembly of FIG. 3, along lines A-A
FIG. 4 is a schematic partial side sectional view of an embodiment of the strut assembly of FIG. 2, along lines 2-2.
FIG. 5 is a schematic partial side sectional view of an embodiment of the strut assembly of FIG. 2, along lines 2-2.
FIG. 5A is a schematic cross-sectional view of an airfoil for the strut assembly of FIG. 5, along lines B-B.
FIG. 6 is a schematic cross-sectional view of an airfoil for the strut assembly according to an embodiment of the present disclosure, displaying flow conditions having a first angle of attack.
FIG. 7 is a schematic cross-sectional view of an airfoil for the strut assembly according to an embodiment of the present disclosure, displaying flow conditions which are significantly deviated from the flow conditions of FIG. 6.
FIG. 8 is a schematic partial side sectional view of an embodiment of the strut assembly of FIG. 2, along lines 2-2.
FIG. 8A is a schematic cross-sectional view of an airfoil for the strut assembly of FIG. 8, along lines C-C.

### DETAILED DESCRIPTION

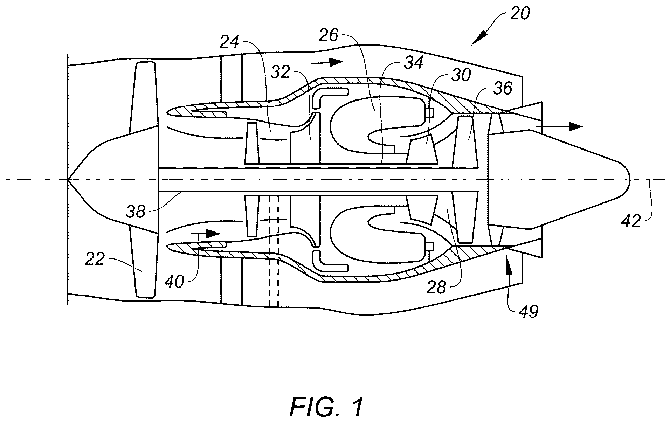

FIG. 1 illustrates an aircraft engine depicted as a gas turbine engine 20 of a type preferably provided for use in subsonic flight, generally comprising in serial flow communication a fan 22 through which ambient air is propelled, a compressor section 24 for pressurizing the air, a combustor 26 in which the compressed air is mixed with fuel and ignited for generating an annular stream of hot combustion gases, and a turbine section 28 for extracting energy from the combustion gases. High pressure rotor(s) 30 of the turbine section 28 are drivingly engaged to high pressure rotor(s) 32 of the compressor section 24 through a high pressure shaft 34. Low pressure rotor(s) 36 of the turbine section 28 are drivingly engaged to the fan 22 and to other low pressure rotor(s) (not shown) of the compressor section 24 through a low pressure (LP) shaft 38 extending within the high pressure shaft 34 and rotating independently therefrom.

The terms "forward", "leading", "aft", and "trailing" are used herein to indicate the relative position of a component or surface. As core air flow 40 passes through the engine 20, a "leading edge" of a stator vane or rotor blade encounters core gas air before the "trailing edge" of the same. In a conventional axial engine such as that shown in FIG. 1, the fan 22 is "forward" of the compressor section 24 and the turbine section 28 is "aft" of the compressor section 24. The terms "inner radial" and "outer radial" refer to relative radial positions from the engine centerline 42. An inner radial component or path is disposed radially closer to an engine centerline 42 than an outer radial component or path. The gas turbine engine 20 diagrammatically shown is an example provided to facilitate the description herein. The present disclosure is not limited to any particular gas turbine engine configuration, including the two-spool engine configuration shown, and may be utilized with single spool gas turbine engines as well as three spool gas turbine engines and the like.

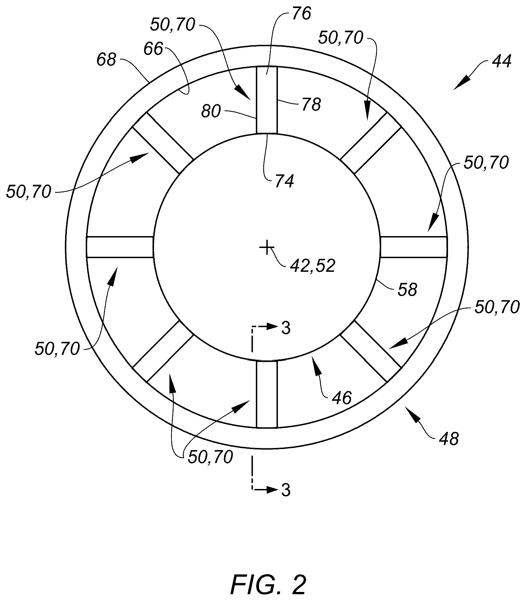

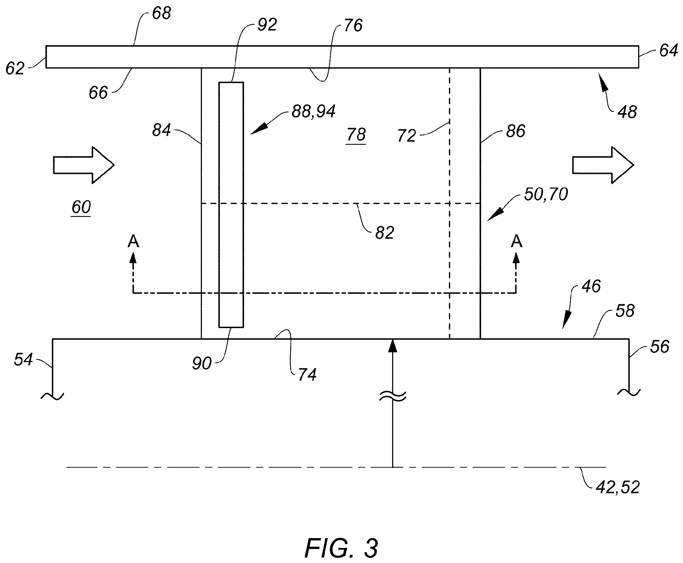

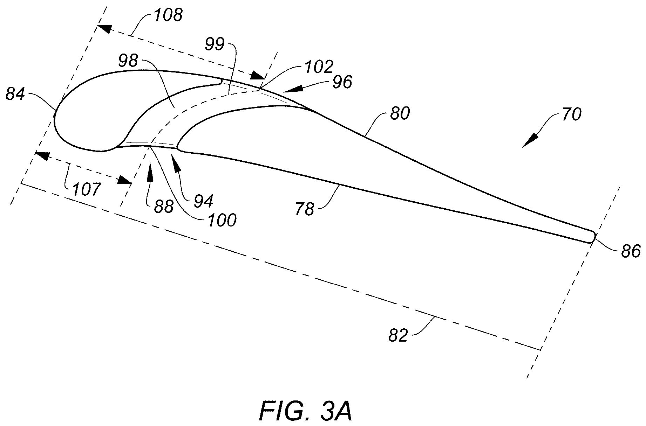

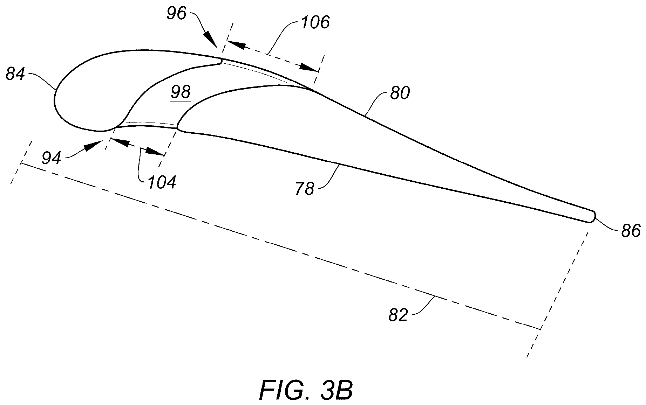

Referring now to FIGS. 2 and 3, a strut assembly 44 for the gas turbine engine 20 is depicted. The strut assembly 44 includes an inner hub 46, an outer platform 48, and a plurality of struts 50. The strut assembly 44 may be a turbine exhaust case disposed in an exhaust section 49 of the gas turbine engine 20 (See FIG. 1). The present disclosure, however, is not limited to such an exemplary application. The strut assembly 44, for example, may alternatively be configured as a turbine vane assembly disposed in the turbine section 28 of the gas turbine engine 20, or a compressor strut assembly and/or a compressor vane assembly disposed in the compressor section 24 of the gas turbine engine 20.

The inner hub 46 of FIGS. 2 and 3 extends axially along an axis 52 between and to an upstream end 54 of the inner hub 46 and a downstream end 56 of the inner hub 46. Briefly, the axis 52 may be a centerline axis of the strut assembly 44, a centerline axis of one or more other components of the gas turbine engine 20 and/or the engine centerline 42 in general. The axis 52 may also or alternatively be a rotational axis of one or more components (e.g., rotors) of the gas turbine engine 20 and/or a rotational axis of the gas turbine engine 20 in general. The inner hub 46 extends circumferentially about (e.g., completely around) an outer radial surface 58 of the inner hub 46. The inner hub outer radial surface 58 is configured to form an inner peripheral boundary of a flowpath 60 (e.g., an annular core flowpath) through the strut assembly 44.

The outer platform 48 of FIGS. 2 and 3 extends axially along the axis between an upstream end 62 of the outer platform 48 and a downstream end 64 of the outer platform 48. The outer platform 48 extends radially between and to an inner radial surface 66 of the outer platform 48 and an outer radial surface 68 of the outer platform 48. The outer platform inner radial surface 66 is configured to form an outer peripheral boundary of the flowpath 60 through the strut assembly 44. The outer platform 48 extends circumferentially about (e.g., completely around) the axis 52, which may provide the outer platform 48 with a full-hoop (e.g., tubular) body. The outer platform 48 is disposed radially outboard of, axially overlaps and circumferentially overlaps (e.g., circumscribes) the inner hub 46.

The struts 50 of FIGS. 2 and 3 are arranged circumferentially about the axis 52 in an array; e.g., a circular array. Each of the struts 50 includes an airfoil 70. Each strut 50 and its airfoil 70 extend radially (relative to the axis 52) from the inner hub outer radial surface 58 and the outer platform inner radial surface 66. Each strut 50 and its airfoil 70 may be connected to (e.g., formed integral with or otherwise attached to) the inner hub 46 and the outer platform 48. With this arrangement, each strut 50 and its airfoil 70 extends radially across the flowpath 60 between the inner hub 46 and the outer platform 48. More particularly, each airfoil 70 of FIG. 3 extends spanwise along a span line 72 of the airfoil 70 between and to a (e.g., radial inner) base 74 of the airfoil 70 and a (e.g., radial outer) tip 76 of the airfoil 70. The airfoil base 74 is adjacent the inner hub outer radial surface 58 and may be connected to the inner hub 46. The airfoil tip 76 is adjacent the outer platform inner radial surface 66 and may be connected to the outer platform 48.

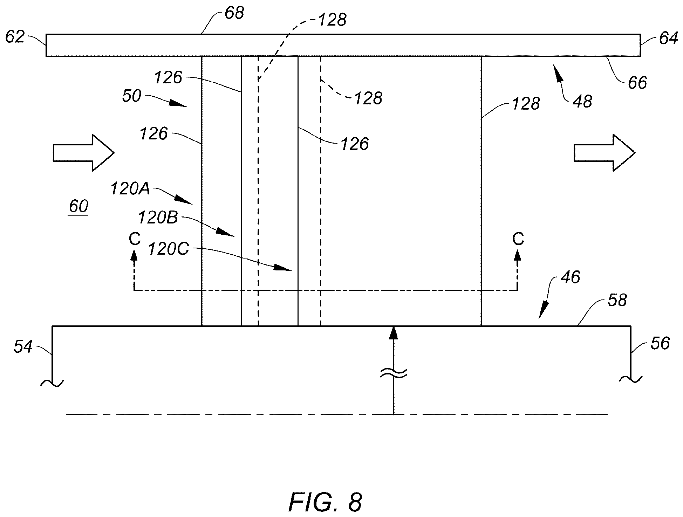

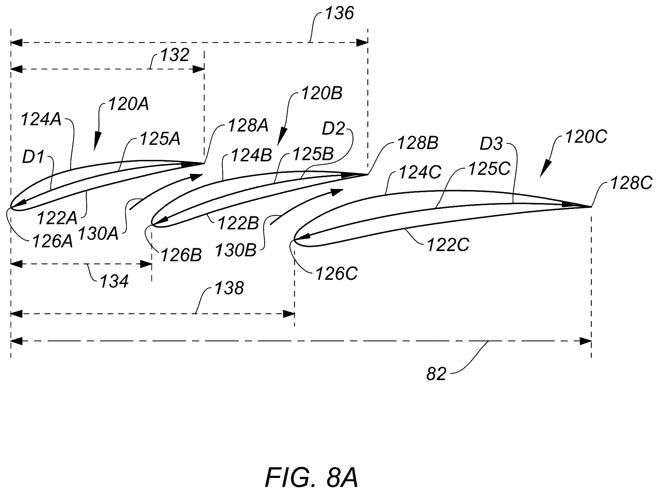

Referring to FIGS. 3 and 3A, the airfoil 70 extends laterally for a thickness of the airfoil 70 between and to a pressure side 78 of the airfoil 70 and a suction side 80 of the airfoil 70. The airfoil 70 extends chordwise along a chord line 82 of the airfoil 70 from a leading edge 84 of the airfoil 70 and a trailing edge 86 of the airfoil 70. The airfoil leading edge 84, the airfoil trailing edge 86, or both may taper along the chord line 82 as the airfoil 70 extends radially from the base 74 to the tip 76, such that a chord length of the base 74 may be different than a chord length of the tip 76. The airfoil leading edge 84 may have an eased (e.g., rounded) profile. Of course, in other embodiments, it is contemplated the leading edge 84 may alternatively have sharp profile (e.g., a pointed cross-sectional geometry). The trailing edge 86 may have an eased profile (See e.g., FIG. 3A) or a sharp profile (See e.g., FIG. 8A). The strut 50 of the present disclosure, however, is not limited to an airfoil configuration.

The strut 50 includes a slot 88 that extends spanwise along the strut 50 from a (e.g., radial inner) slot base 90 to a (e.g., radial outer) slot tip 92. The slot base 90 may be proximate (e.g., spaced radially outward of) the inner hub outer radial surface 58 and the slot tip 92 may be proximate (e.g., spaced radially inward of) the outer platform inner radial surface 66 . The slot 88 may extend spanwise along the strut 50 any distance which would maintain the structure integrity of the strut 50. In some embodiments, the slot base 90 may be connected to the inner hub 46 and the slot tip 92 may be connected to the outer platform 48 (e.g., slot 88 may extend the entire radial span of airfoil 70).

The slot 88 extends from the airfoil pressure side 78 to the airfoil suction side 80. The slot 88 has a slot inlet 94 located on the airfoil pressure side 78 and a slot outlet 96 on the airfoil suction side 80. The slot 88 defines a fluid flow passage for directed fluid flow from the airfoil pressure side 78 to the airfoil suction side 80 through the airfoil 70. The slot 88 extends through the thickness of the airfoil 70 forming a channel 98 from the slot inlet 94 to the slot outlet 96. A channel 98 extends along a curved channel centerline 99 from a center 100 of the slot inlet 94 to a center 102 of the slot outlet 96. With additional reference to FIG. 3B, the slot inlet 94 may include an inlet width 104 and the slot outlet 96 may include an outlet width 106 extending along the chord line 82 at a given radial position of the slot 88. The outlet width 106 may be equal to the inlet width 104 such that a ratio of the outlet width to the inlet width may be 1:1. In some embodiments, the outlet width 106 may be less than (e.g., equal to or less than) the inlet width 104. For example, the outlet width 106 may be up to fifty percent (50%) less than the inlet width 104. **In** other embodiments, the outlet width 106 may be greater than (e.g., equal to or greater than) the inlet width 104. For example, the outlet width 106 may be up to fifty percent (50%) greater than the inlet width 104. The present disclosure, however, is not limited to the foregoing exemplary outlet width to inlet width ratios.

The center 100 of the slot inlet 94 may be located along the chord line 82 a first distance (e.g., position) 107, and the center 102 of the slot outlet 96 may be located along the chord line 82 a second distance (e.g., position) 108. The first distance 107 may be less than the second distance 108.

The first position 107 of the slot inlet 94 (e.g., the center 100 location of the slot inlet 94 relative to the airfoil pressure side 78) may be determined based on a percentage of the chord line 82 length for any radial position of the slot 88 along the span of the airfoil 70. For example, the slot inlet 94 may be located along the chord line 82 from a range of about ten percent (10%) to about ninety percent (90%) of the chord line 82. Alternatively, the slot inlet 94 may be located along the chord line 82 from a range of about twenty-five percent (25%) to about fifty percent (50%). The present disclosure, however, is not limited to the foregoing exemplary slot inlet locations. For example, the location of the slot inlet 94 (e.g., the center 100 of the slot inlet 94) may be disposed anywhere beyond (e.g., downstream of) ten percent (10%) or twenty percent (20%) of the chord line 82. As used herein, the term "about" is intended to mean any percent within plus or minus two percent (±2%).

The second position 108 of the slot outlet 96 (e.g., the center 102 location of the slot outlet 96 relative to the airfoil suction side 80) may be determined based on a percentage of the chord line 82 length for any radial position of the slot 88 along the span of the airfoil 70. For example, the slot outlet 96 may be located along the chord line 82 from a range of about ten percent (10%) to about ninety percent (90%) of the chord line 82. Alternatively, the slot outlet 96 may be located along the chord line 82 from a range of about twenty-five percent (25%) to about fifty percent (50%). The present disclosure, however, is not limited to the foregoing exemplary slot outlet locations. For example, the location of the slot outlet 96 (e.g., the center 102 of the slot outlet 96) may be disposed anywhere beyond (e.g., downstream of) ten percent (10%), fifteen percent (15%) or twenty-five percent (25%) of the chord line 82. As used herein, the term "about" is intended to mean any percent within plus or minus two percent (± 2%).

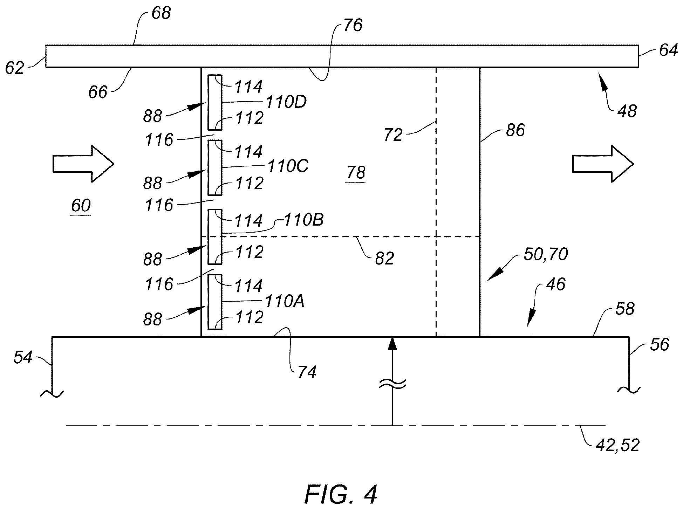

In one embodiment, referring now to FIG. 4, the slot 88 of the strut assembly 44 may be formed from a plurality of perforations 110A-D disposed along the span line 72 of the airfoil 70 between the (e.g., radial inner) base 74 of the airfoil 70 and the (e.g., radial outer) tip 76 of the airfoil 70. Each of the plurality of perforations 110A-D (referred to generally as "110") may extend spanwise from a (e.g., radial inner) perforation base 112 to a (e.g., radial outer) perforation tip 114 along the slot 88. Each of the plurality of perforations 110 may be radially spaced apart, such that a solid airfoil boundary 116 is formed between a perforation tip 114 of a first perforation 110A and a perforation base 112 of a second perforation 110B. In such a configuration, each of the plurality of perforations 110 will form a fluidly discrete passage.

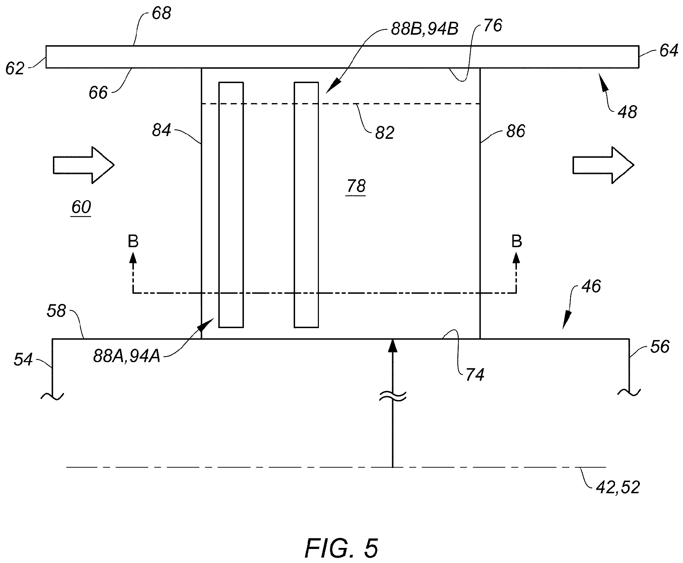

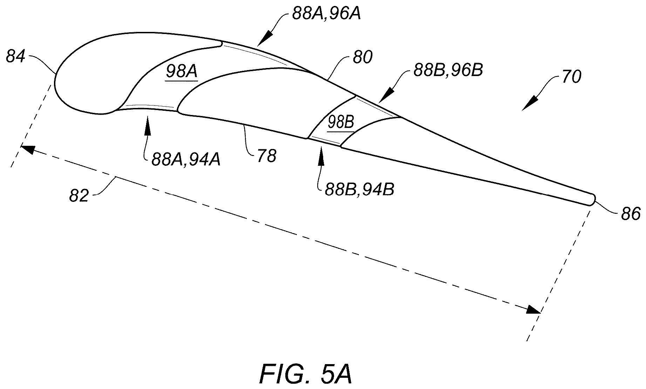

In one embodiment, referring now to FIGS. 5 and 5A, the strut 50 may include multiple slots 88A, 88B (referred to generally as "88") disposed along the chord line 82 of the airfoil 70. As depicted in FIG. 5A, airfoil 70 includes a first slot 88A and a second slot 88B extending through the thickness of the airfoil 70. Each of the airfoil 70 slots 88 may define a fluid flow passage for directing fluid flow from the airfoil pressure side 78 to the airfoil suction side 80 through the airfoil 70. A first channel 98A may be formed extending between a first slot inlet 94A located on the airfoil pressure side 78 and a first slot outlet 96A located on the airfoil suction side 80. A second channel 98B may be formed extending between a second slot inlet 94B and a second slot outlet 96B. The second slot inlet 94B may be located on the airfoil pressure side 78 and spaced chordwise along the chord line 82 from the first slot inlet 94A. The second slot outlet 96B may be located on the airfoil suction side 80 and spaced chordwise along the chord line 82 from the first slot outlet 96A. While the exemplary embodiment of FIGS. 5 and 5A depict the strut 50 including two channels 98A, 98B, the present disclosure is not intended to be so limited, and the airfoil 70 may include any number of channels 98 extending between the thickness of the airfoil 70.

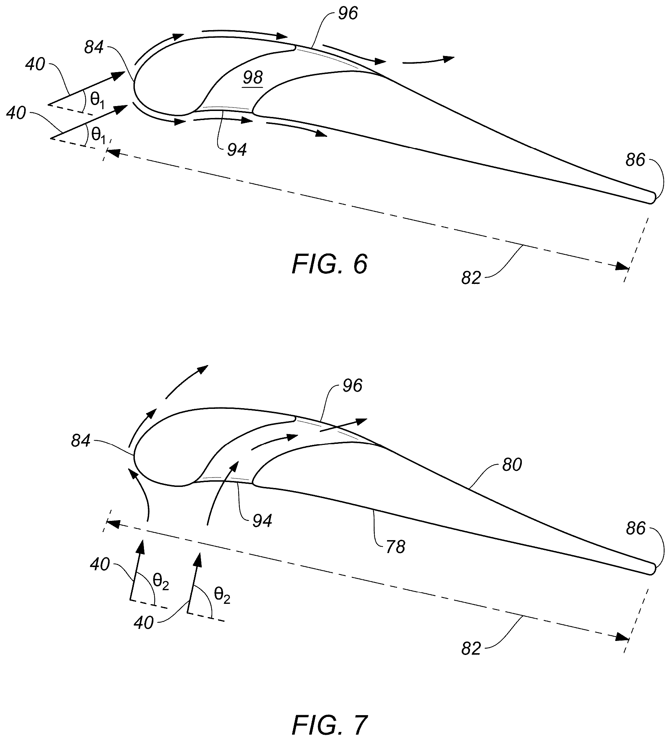

The strut 50 of the present disclosure is positioned within the strut assembly 44 in a direction favorable to de-swirl flow (e.g., the core flow 40) moving through the assembly. Referring now to FIG. 6, core flow 40 is illustrated entering the strut assembly 44 under conditions where a first angle of attack θ₁ of incoming flow 40 is within an accepted range (e.g., between - 30 degrees and 30 degrees). Under such conditions, core flow 40 impinges the airfoil leading edge 84 and proceeds aft along respective sides of the airfoil 70 (e.g., airfoil pressure side 78 and airfoil suction side 80).

During operation of gas turbine engines, turbine exhaust cases disposed in a turbine exhaust section can be subject to incoming flows having highly variable angles of attack due to upstream components. Notably, the turbine section operates with a large variation in speed depending on the operating condition, thereby producing highly variable flow conditions. These highly variable flow conditions can occur, for example, during aircraft take-off and cruise operations. Flow with too high an angle of attack on the airfoil of a turbine exhaust case can result in bluff body formation on the airfoil which leads to increased losses in the turbine exhaust section.

The strut assembly 44 of the present disclosure mitigates bluff body formation which would produce significant losses through use of the slot 88 within the strut airfoil 70. With reference now to FIG. 7, the core flow 40 is depicted impinging the strut assembly 44 at a second angle of attack θ₂ which is significantly deviated from first angle of attack θ₁ (e.g., ranging from greater than 30 degrees to 90 degrees), resulting in significant amounts of flow 40 impacting the pressure side 78 of the airfoil 70. Under such conditions, core flow 40 may be directed around the airfoil 70 leading edge (e.g., the rounded or eased leading edge) 84 or directed into the slot 88 via the slot inlet 94. The core flow 40 will then proceed through channel 98 and will exit the airfoil 70 via the slot outlet 96. Flow egressing the slot outlet 96 will bypass the associated pressure losses from a blunt facing body, thereby preventing (e.g., reducing, minimizing, or eliminating) losses within the strut assembly 44 and removing pressure drag. Under flow conditions illustrated in FIG. 6, the slot 88 of the airfoil 70 has little impact on the flowpath profile of the strut assembly 44, and flow 40 entering the strut assembly 44 will impinge the airfoil leading edge 84 and proceed aft along respective sides of the airfoil 70 (e.g., airfoil pressure side 78 and airfoil suction side 80), de-swirling and exhausting the flow 40.

In some embodiments, referring now to FIGS. 8 and 8A, the strut 50 of the strut assembly 44 may comprise a plurality of stepped airfoils 120A-C disposed axially along the strut assembly 44 from the upstream end 54 of the inner hub 46 to the downstream end 56 of the inner hub 46. As depicted, each of a first airfoil 120A, a second airfoil 120B, and a third airfoil 120C (referred to generally as "120") extend radially (relative to the axis) from the inner hub outer radial surface 58 and the outer platform inner radial surface 66. Each stepped airfoil 120 is connected to (e.g., formed integral with or otherwise attached to) the inner hub 46 and the outer platform 48. With this arrangement, each stepped airfoil 120 extends radially across the flowpath 60 between the inner hub 46 and the outer platform 48. Each of the stepped airfoils 120 extend laterally for a thickness of the respective stepped airfoil 120 from a pressure side 122A-C and a suction side 124A-C. Each of the stepped airfoils extends along a camber 125A-C from a leading edge 126A-C to a trailing edge 128A-C. A first camber 125A of the first stepped airfoil extends a distance D1, a second camber 125B of the second stepped airfoil 120B extends a distance D2, and a third camber 125C of the third stepped airfoil 12C extends a distance D3. The first distance D1 may be less than the second distance D2. The second distance D2 may be less than the third distance D3. While three stepped airfoils 120 are depicted in the embodiment illustrated in FIGS. 8 and 8A, any number of stepped airfoils may be used (e.g., two or more stepped airfoils). The stepped airfoils 120 may have any size and/or shape which may be necessary to form one or more flow channels 130A, 130B.

The trailing edge 128A of the first stepped airfoil 120A may be disposed along the chord line 82 at a first trailing edge location 132, and the leading edge 126B of the second stepped airfoil 120B may be disposed along the chord line 82 at a second leading edge location 134. The first trailing edge location 132 may be greater than the second leading edge location 134. The trailing edge 128B of the second stepped airfoil 120B may be disposed at a second trailing edge location 136, and the leading edge 126C of the third stepped airfoil 120C may be disposed along the chord line 82 at a third leading edge location 138. The second trailing edge location 136 may be greater than the third leading edge location 138. Each flow channel 130A, 130B (referred to generally as "130") is formed between two of the plurality of stepped airfoils 120. For example, as illustrated in FIG. 8A, a first flow channel 130A is formed between the suction side 124B of the second stepped airfoil 120B and the pressure side 122A of the first airfoil 120A. A second flow channel 130B is formed between the suction side 124C of the third airfoil 120C and the pressure side 122B of the second airfoil 120B.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. **In** alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An apparatus for a gas turbine engine (20), comprising:
an airfoil (70) extending spanwise along a span line (72) from a base (74) to a tip (76), the airfoil (70) extending laterally between a pressure side (78) and a suction side (80), and the airfoil (70) extending along a chord line (82) from a leading edge (84) to a trailing edge (86); and
the airfoil (70) including a slot (88) extending through the airfoil (70) from a slot inlet (94) to a slot outlet (96), the slot inlet (94) disposed on the pressure side (78) and the slot outlet (96) disposed on the suction side (80), the slot (88) defining a channel (98) for directing fluid flow from the pressure side (78) to the suction side (80) through the airfoil (70);
wherein the slot (88) is configured to reduce pressure losses within the apparatus.

2. The apparatus of claim 1, wherein the slot (88) extends spanwise along the airfoil (70) from a slot base (90) to a slot tip (92).

3. The apparatus of claim 1 or 2, wherein:
the airfoil (70) is one of a plurality of airfoils (120A, 120B, 120C) arranged in an array; and
each of the plurality of airfoils (120A, 120B, 120C) includes a respective slot (88) configured to reduce pressure losses within the apparatus.

4. The apparatus of claim 1, 2 or 3, wherein:
the slot inlet (94) includes an inlet width (104);
the slot outlet (96) includes an outlet width (106); and
the outlet width (106) is equal to or less than the inlet width (104).

5. The apparatus of claim 1, 2 or 3, wherein:
the slot inlet (94) includes an inlet width (104);
the slot outlet (96) includes an outlet width (106); and
the outlet width (106) is equal to or greater than the inlet width (104).

6. The apparatus of any preceding claim, wherein:
the slot inlet (94) comprises a first slot inlet (94A) including a center (100);
the slot outlet (96) comprises a first slot outlet (96A) including a center (102);
the airfoil (70) includes a second slot (88B) extending through the airfoil (70) from a second slot inlet (94B) to a second slot outlet (96B), and the second slot (88B) defining a second channel (98B) for directing fluid flow from the pressure side (78) to the suction side (80) through the airfoil (70);
a center (100) of the second slot inlet (94B) disposed on the pressure side (78) and spaced chordwise from the center (100) of the first slot inlet (94A); and
a center (102) of the second slot outlet (96B) disposed on the suction side (80) and spaced chordwise from the center (102) of the first slot outlet (96A).

7. The apparatus of any preceding claim, wherein the slot (88) comprises a plurality of perforations (110A, 110B, 110C, 110D) extending spanwise along the airfoil (70) between the base (74) of the airfoil (70) and the tip (76) of the airfoil (70).

8. The apparatus of claim 7, wherein:
a first of the plurality of perforations (110A) extends spanwise along the airfoil (70) from a first perforation base (112) to a first perforation tip (114);
a second of the plurality of perforations (110B) extends spanwise along the airfoil (70) from a second perforation base (112) to a second perforation tip (114), the second of the plurality of perforations (110B) disposed radially outward of the first of the plurality of perforations (110A); and
a boundary (116) extends spanwise along the airfoil (70) from the first perforation tip (114) to the second perforation base (112).

9. The apparatus of any preceding claim, wherein a/the center (100) of the slot inlet (94) is disposed on the pressure side (78) of the airfoil (70) at a first distance (107), the first distance (107) comprising a length of the chord line (82) ranging from about ten percent to about ninety percent.

10. The apparatus of any preceding claim, further comprising a strut (50) comprising the airfoil (70).

11. The apparatus of any preceding claim, further comprising:
a turbine exhaust section (49) of the gas turbine engine (20);
the airfoil (70) arranged within the turbine exhaust section (49).

12. The apparatus of any preceding claim, wherein the leading edge (84) has an eased profile.

13. The apparatus of any preceding claim, wherein a/the center (100) of the slot inlet (94) is disposed along the chord line (82) a/the first distance (107), and a/the center (102) of the slot outlet (96) is disposed along the chord line (82) at a second distance (108), the second distance (108) greater than the first distance (107).

14. The apparatus of any preceding claim, further comprising:
an inner hub (46); and
an outer platform (48) radially outboard of the inner hub (46);
the airfoil (70) extending radially between and connected to the inner hub (46) and the outer platform (48),
wherein, optionally, the slot (88) extends spanwise along the airfoil (70) from the inner hub (46) to the outer platform (48).

15. A strut assembly (44) for a turbine exhaust section (49) of a gas turbine engine (20), comprising:
an inner hub (46);
an outer platform (48) radially outboard of the inner hub (46);
the apparatus of any of claims 1 to 13, wherein the airfoil is a first stepped airfoil (120A) of a plurality of stepped airfoils (120A, 120B, 120C) extending radially between and connected to the inner hub (46) and the outer platform (48);
a second stepped airfoil (120B) of the plurality of stepped airfoils (120A...120C) extending spanwise along the span line (72) from a base (74) to a tip (76), the second stepped airfoil (120B) extending laterally between a pressure side (122B) and a suction side (124B), and the second stepped airfoil (120B) extending along the chord line (82) from a leading edge (126B) to a trailing edge (128B); and
a flow channel (130A) extending between the suction side (124B) of the second stepped airfoil (120B) and the pressure side (122A) of the first stepped airfoil (120A), the flow channel (130A) configured to reduce pressure losses within the strut assembly (44).
